# EUROPEAN PATENT APPLICATION

(11) **EP 1 580 244 A2**
(43) Date of publication of application: **28.09.2005**
(21) Application number: 05006405.4
(22) Date of filing: 23.03.2005
(51) Int. Cl.: C09J 131/04

(54) **Bicomponent adhesive with improved heat resistance and extended pot life**

(30) Priority: 25.03.2004 US 808819
(71) Applicant: National Starch and Chemical Investment Holding Corporation, Delaware 19720 (US)
(72) Inventor: Faust, Hans Uwe, 52078 Aachen Brand (DE); Van Boxtel, Marc, 6121 NS Born (NL)
(74) Representative: Held, Stephan

(57) **Abstract**

A stable, heat resistant colloid stabilized waterbased bicomponent wood adhesive based on vinyl acetate and N-methylolacrylamide as a cross-linking agent and also including an aromatic and/or cyclo aliphatic monomer, such as 2-phenoxy ethyl acrylate and/or isobornyl methacrylate, and methyl methacrylate. The colloid system contains a high molecular weight partially hydrolyzed polyvinylalcohol and one or more intermediate hydrolyzed polyvinyl alcohols.

## Description

### FIELD OF THE INVENTION

The present invention discloses a bicomponent wood adhesive having improved heat resistance and extended pot life.

### BACKGROUND OF THE INVENTION

Aqueous dispersions of N-methylol acrylamide-vinyl acetate polymers are widely used in formulating wood adhesives wherein bond strength, fast setting, colorless glue lines and ease of application are desired. Protective colloids are often added to stabilize the dispersions against gelling during storage and to improve water resistance. The pre-formulated adhesives are often catalyzed with various acidic metal salts as is known in the art. The addition of the catalysts, such as aluminum chloride, often results in adhesives that have poor stability without the post addition of additional ingredients. Further, such vinyl acetate based systems do not fulfill heat resistance requirements, including the WATT91 requirement, without the post addition of certain coalescence agents such as diacetone alcohol. It would be advantageous to provide a polymer for use in a wood adhesive that provides extended pot life and high heat resistance without the post addition of any ingredients.

### SUMMARY OF THE INVENTION

The present invention describes a stable, heat resistant colloid stabilized waterbased bicomponent wood adhesive based on vinyl acetate and N-methylolacrylamide as a cross-linking agent and also including an aromatic and/or cyclo aliphatic monomer, such as 2-phenoxy ethyl acrylate and/or isobornyl methacrylate, and methyl methacrylate. The colloid system contains a high molecular weight partially hydrolyzed polyvinyl alcohol and one or more intermediate hydrolyzed polyvinyl alcohols. In addition, any other type of polyvinyl alcohol may be added.

### DETAILED DESCRIPTION OF THE PREFERRED EMBODIMENTS

The polyvinyl acetate based adhesives of the present invention are prepared from a copolymer of a vinyl ester monomer and a cross-linking agent and provide high heat resistance without the post addition of any ingredients. The preferred cross-linking agent is N-methylolacrylamide and vinyl acetate is the preferred vinyl ester monomer. An aromatic and/or cyclo aliphatic monomer, preferably 2-phenoxy ethyl acrylate and/or isobornyl methacrylate, is added to provide for penetration of the polymer into the wood substrate. An alkyl methacrylate, preferably methyl methacrylate, is added to the backbone to provide an increase in heat resistance and to provide additional stability. The addition of the aromatic and/or cyclo aliphatic monomer and the methyl methacrylate obviate the need for post addition of other ingredients in order to obtain high heat resistance and enhanced stability. The colloid stabilization system comprises at least a mixture of a high molecular weight partially hydrolyzed polyvinyl alcohol and one or more intermediate hydrolyzed polyvinyl alcohols. Optionally, coalescence agents may be added to the formulation. The adhesives formulated with these ingredients provide enhanced stability and increased pot life. The formulations also provide increased resistance to heat. Among the testing standards utilized for heat resistance are the WATT91 standard of resistance greater than 7 N/mm² and the DIN 204/205 test standard of an adhesive bond's resistance to hot water, which is required by test standard strength group to D4 to be greater than 4 N/mm².

Although vinyl acetate is the preferred vinyl ester to be used, other suitable monomers are vinyl formate, vinyl isobutyrate, vinyl pivalate, vinyl 2-ethylhexanoate, vinyl esters of saturated, branched monocarboxylic acids having 9 to 10 carbon atoms in the acid radical, such as VeoVa9 or VeoVa10, vinyl esters of relatively long-chain, saturated or unsaturated fatty acids, such as, for example, vinyl laurate, vinyl stearate and vinyl esters of benzoic acid and substituted derivatives of benzoic acid, such as vinyl p-tert-butylbenzoate. These monomers can be used to form homopolymers or in combination to form copolymers. The total weight percentage of these monomers would be in the range of about 50 weight percent to about 90 weight percent.

In addition to methyl methacrylate, other alkyl methacrylates such as butyl methacrylate and dodecyl methacrylate may be incorporated to improve on heat resistance. Typical levels of incorporation are below 10 pphm.

The high molecular weight partially hydrolyzed polyvinyl alcohol is preferably in the range of about 86 - 89% hydrolyzed. Most preferably the high molecular weight partially hydrolyzed polyvinyl alcohol is about 88% hydrolyzed and a 4% aqueous solution has at least a viscosity of about 40 mPa·s at 20°C (DIN 53 015). The intermediate hydrolyzed polyvinyl alcohols are preferably in the range of about 90 to about 96 percent hydrolyzed and preferably have a molecular weight corresponding to about 30 mPa·s for a 4% aqueous solution at 20°C (DIN 53 015). The intermediate molecular weight polyvinyl alcohol may be a mixture of 90 - 96 % hydrolyzed polyvinyl alcohol and 86 - 89 % hydrolyzed polyvinyl alcohol. The intermediate hydrolyzed polyvinyl alcohols delay the transfer of the catalyst to the reactive (cross-linking) centers and increase the pot life and stability of the system. The polyvinyl alcohol component is in the range of about less than 20 weight percent of the formulation and preferably in the range of less than about 10 weight percent of the formulation. While various ratios of the polyvinyl alcohol components may be utilized, it has been found that a ratio in the range of about 1:1 to about 1:4 high molecular weight partially hydrolyzed polyvinyl alcohol to intermediate hydrolyzed medium molecular weight polyvinyl alcohol is preferred, while a ratio in the range of about 1:2 is most preferred. In addition to the referenced high molecular weight partially hydrolyzed and the intermediate hydrolyzed polyvinylalcohols, any other type of polyvinylalcohol may be added in order to achieve the desired product performance characteristics, such as adequate rheology behavior.

In addition to or instead of 2-phenoxy ethyl acrylate or isobornyl methacrylate, other aromatic or cycloaliphatic modified monomers or hydrophobic monomers, such as VeoVa10, dihydroxydicyclopentadienyl acrylate and 4-*tert*-butyl cyclohexyl acrylate may be incorporated into the formulation in order to increase the water resistance. These monomers can be used at a level below 20 pphm but normally between 0.01 and 10 pphm.

A cross-linking agent is incorporated into the formulation. The cross-linking comonomers increase the water resistance of the polymer. N-methylol acrylamide is the most widely used and preferred cross-linking monomer. Other cross-linking comonomers include polyethylenically unsaturated monomers like diallyl phthalate, diallyl maleate, triallyl cyanurate, tetraallyloxyethane, divinylbenzene, butanediol 1,4- dimethacrylate, triethylene glycol dimethacrylate, divinyl adipate, allyl(meth)acrylate, vinyl crotonate, methylenebisacrylamide, hexanediol diacrylate, pentaerythritol diacrylate and trimethylolpropane triacrylate. The proportion of these comonomers relative to the total amount of monomers is up to about 10% by monomer weight, and preferably between about 0.01 and about 5 percent by monomer weight.

Other, particularly suitable comonomers, are those containing N-functional groups, including, in particular, (meth)arylamide, allyl carbamate, acrylonitrile, N-methylol methacrylamide, N-methylolallyl carbamate and the N-methylol esters, alkyl ethers and Mannich bases of N- methylol(meth)acrylamide and N-methylolallyl carbamate, acrylamidoglycolicacid, methyl acrylamidomethoxyacetate, N-(2,2- dimethoxy-1-hydroxyethyl)acrylamide, N-dimethylaminopropyl(meth)acrylamide, N-methyl(meth)acrylamide, N-butyl(meth)acrylamide, N-cyclohexyl(meth)acrylamide, N-dodecyl(meth)acrylamide N-benzyl(meth)acrylamide, p-hydroxyphenyl(meth)acrylamide, N-(3-hydroxy-2,2-dimethylpropyl)methacrylamide, ethylimidazolidone methacrylate, N-vinylformamide, N-vinylpyrrolidone. The proportion of these comonomers relative to the total amount of monomers is up to about 15% by weight and are preferably in the range of about 0.01 to about 10 percent by weight. Other comonomers which are cross-linkable or self-crosslinking, such as diacetoneacrylamide, allyl acetoacetate, vinyl acetoacetate and acetoacetoxyethyl (meth)acrylate can be used. The proportion of these comonomers relative to the total amount of monomers is up to about 10 percent by weight, and preferably in the range of about 0.01 to about 5 percent by weight.

Additional ingredients, such as wetting agents, may also be incorporated into the formulation. Di-(2-ethylhexyl)sulfo succinate, sodium salt is preferably used as a wetting agent, but also other mono- and diester sulfo succinates can be used. Typical levels are in the range of less than about 5 weight percent and preferably below about 1 weight percent. The polymer dispersions may also contain other additives necessary to achieve the desired properties. Such additives include additives to lower the film forming temperature and plasticizers. The concentrations of the additives are dependent upon the desired performance characteristics.

Acid catalysts such as aluminum nitrate and Aluminium(III), Chromium(III) and zirconium(IV) salts may be used. These catalysts are incorporated at levels between about 0.01 and about 10 weight percent and preferably in the range of about 5 weight percent.

During the actual polymerization, various combinations of water and/or oil soluble initiators, having both thermal and redox couples, that are typically used in vinyl acetate polymerization are suitable for this formulation. These initiators include ammonium, sodium and potassium persulphate, hydrogen peroxide and tert-butyl hydroperoxide as thermal initiators or oxidizing agents, and sodium meta bisulfite, sodium formaldehyde sulfoxylate, ascorbic acid, sodium ascorbate, sodium eryl thorbate and Bruggolite FF6.

The preferred embodiment of the polymer would be a poly(vinyl acetate-co-N-methylolacrylamide) polymer based dispersion, containing vinyl acetate, N-methylolacrylamide, 2-phenoxy ethyl acrylate and/or isobornyl methacrylate and methyl methacrylate. The amount of 2-phenoxy ethyl acrylate and/or isobornyl methacrylate is in the range of about 0.1 to about 20 weight percent. In an alternative embodiment, the amount of 2-phenoxy ethyl acrylate and/or isobornyl methacrylate is in the range of about 0.5 to about 10 weight percent. The stabilization system would contain high molecular weight 88% hydrolyzed PVOH, medium molecular weight 92% hydrolyzed PVOH and sodium di-(2-ethylhexyl) sulfo succinate. Butyl diglycol acetate would be added as a coalescence agent.

The polymerizations are performed in an open reactor with reflux condenser. During the formulation of the adhesive, in order to achieve better incorporation of the N-methylolacrylamide, 2-propanol is optionally added. The preferred ratio of N-methylolacrylamide and 2-propanol is in the range of about 1:3 (2-propanol: N-methylolacrylamide). 15% of the total amount of vinyl acetate is used in the first stage of the polymerization together with the polyvinyl alcohol solution. A redox system is used to initiate the reaction, preferably a combination of sodium meta bisulfite and ammonium persulphate or sodium persulphate is used. The remainder of the vinyl acetate together with the 2-phenoxy ethyl acrylate and a solution of the N-methylolacrylamide, 2-propanol and the di-(2-ethylhexyl) sulfo succinate are slow added, in separate streams, over 3 - 4 hours. The polymerization temperature is typically between 50 and 90°C, but preferably between 70 and 75 °C and no further initiators are added during the slow adds. The methyl methacrylate is then added over a period of approximately 30 minutes after the main reaction. The BDGA is post added afterwards at temperatures preferably below 50 °C. The viscosity of the base system, without the addition of an acid catalyst solution is typically between about 10,000 and 70,000 mPa·s in order to achieve a viscosity of the formulated system of about 5,000 to about 25,000 mPa·s.

While not intending to be limiting in any manner, the present invention may be better understood by reference to the following example.
Example. Three batches of dispersions were formulated with 2% methyl methacrylate, 0.08% sodium di-(2-ethyl hexyl) sulfo succinate and vinyl acetate. Sodium metabisulfite and sodium persulfate were used as initiators. Additional ingredients were added as shown in Table 1. The indicated weight percentages are based on total dispersion weight.

**Table 1.**

| Dispersion Formulations | | | | | |
|---|---|---|---|---|---|
| Sample | High MW 88% Hydrolyzed PVOH¹ (wt%) | Medium MW 92% Hydrolyzed PVOH² (wt%) | Medium MW 88% Hydrolyzed PVOH³ (wt%) | 2-phenoxy ethyl acrylate (wt%) | NMA (wt%) |
| 1 | 0.9 | 1.8 | 0 | 0 | 1 |
| 2 | 0.9 | 1.8 | 0 | 1 | 1 |
| 3 | 0.8 | 1.8 | 0.8 | 0.5 | 2 |

| | | | | | |
|---|---|---|---|---|---|
| ¹MOWIOL 40/88 commercially available from KSE | | | | | |
| ²MOWIOL 30/92 commercially available from KSE | | | | | |
| ³MOWIOL 23/88 commercially available from KSE | | | | | |

All of the dispersions were catalyzed with 5% of a 55% active solution of aluminum chloride. The samples were tested as follows: The values of the tear strengths of beechwood test specimens after treatment in boiling water was performed according to DIN 204/D4 test standards. The specimens were prepared following DIN EN 205. Pairs of beechwood panels (125x325x5 mm each) were bonded to one another with the formulated adhesive. The adhesive was evenly applied at approximately 150 gsm. The specimens were placed in a hydraulic press and pressure is applied at approximately 2 kg/cm² glue line pressure for 2 minutes before increasing the pressure to approximately 16 kg/cm² glue line pressure for a minimum of 4 hours at 20°C. Testing was performed after 7 days of storage under standards climate conditions, storage for 6 hours in boiling water and then 2 hours in cold water. The average D4 value shown in Table 2 was taken from ten test specimens.

The WATT91 testing was performed for heat resistance and thermal stability. Similar beechwood panels were used as in the previous test. The bonded panels were divided into test specimens each measuring 150 mm in length and 20 mm in width. The test specimens were stored at a temperature or 80°C in an oven preheated to 80°C. Directly following hot storage, the thermal stability or heat resistance was determined in a tensile tear test DIN EN 205, in which the bonded specimens were pulled apart using a tensile testing machine at a pulling speed of 50 mm/min and were stressed until they broke. The maximum force (Fmax) which occurred upon fracture was determined. The heat resistance was determined by dividing the Fmax by the size of the bonded test area. To fulfill the requirements of high heat resistance, the resistance has to be at least 7.0 N/mm². The results illustrated in Table 2 were taken from the average of ten test samples.

**Table 2.**

| Dispersion Test Results | | |
|---|---|---|
| Sample | D4 (N/mm²) | WATT91 (N/mm²) |
| 1 | 3.7 | 7.5 |
| 2 | 4.1 | 8.0 |
| 3 | 4.3 | 8.8 |

As shown in Table 2, the optimum results were obtained when both types of polyvinyl alcohol and 2-phenoxy ethyl acrylate were included in the formulation.

Similarly, a formulation containing 0.5% isobornyl methacrylate and 2% NMA was formulated and tested for tear strength per the D4 standard. This formulation had a D4 value of 4.2.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A water-based, bicomponent adhesive comprising a polyvinyl alcohol stabilized poly(vinyl acetate-co-N-methylolacrylamide) polymer based dispersion, the polymer comprising vinyl acetate; N-methylolacrylamide; one or more aromatic or cyclo aliphatic monomers; and one or more alkyl methacrylates, wherein the polymer is prepared in the presence of a protective colloid system which comprises high molecular weight partially hydrolyzed polyvinyl alcohol and intermediate hydrolyzed polyvinyl alcohol.

2. The adhesive of claim 1, wherein the aromatic monomer is 2-phenoxy ethyl acrylate.

3. The adhesive of claim 1, wherein the cyclo aliphatic monomer is isobornyl methacrylate.

4. The adhesive of claim 1, wherein the alkyl methacrylate is methyl methacrylate.

5. The adhesive of claim 1, wherein the high molecular weight hydrolyzed polyvinyl alcohol is a 86 - 89% hydrolyzed polyvinyl alcohol.

6. The adhesive of claim 1, wherein the intermediate molecular weight polyvinyl alcohol is a 90 - 96 % hydrolyzed polyvinyl alcohol.

7. The adhesive of claim 1, wherein the intermediate molecular weight polyvinyl alcohol is a mixture of the 90 - 96 % hydrolyzed polyvinyl alcohol and the 86 - 89 % hydrolyzed polyvinyl alcohol.

8. The adhesive of claim 1 wherein the ratio of high molecular weight partially hydrolyzed polyvinyl alcohol to intermediate hydrolyzed medium molecular weight polyvinyl alcohol is between about 1:4 and 1:1.

9. The adhesive of claim 1, further comprising one or more of the group consisting of coalescence agents, initiators, acid catalysts, sodium di-(2-ethyl hexyl) sulfo succinate, and mixtures thereof.

10. The adhesive of claim 1, wherein the N-methylolacrylamide is present in an amount in the range of about 0.01 to about 5 weight percent of the adhesive.

11. The adhesive of claim 1, wherein_the vinyl acetate is present in an amount in the range of about 50 to about 90 weight percent of the adhesive.

12. The adhesive of claim 1, wherein the aromatic monomer is present in an amount in the range of about 0.1 to about 20 weight percent of the adhesive.

13. The adhesive of claim 12, wherein the aromatic monomer is present in an amount in the range of about 0.5 to about 10 weight percent of the adhesive.

14. The adhesive of claim 1, wherein the cyclo aliphatic monomer is present in an amount in the range of about 0.1 to about 20 weight percent of the adhesive.

15. The adhesive of claim 14, wherein the cyclo aliphatic monomer is present in an amount in the range of about 0.5 to about 10 weight percent of the adhesive.
